# EUROPEAN PATENT APPLICATION

(11) **EP 2 808 838 A1**
(43) Date of publication of application: **03.12.2014**
(21) Application number: 14170152.4
(22) Date of filing: 28.05.2014
(51) Int. Cl.: G06Q 30/02

(54) **Customer category analysis device, customer category analysis system and customer category analysis method**

(30) Priority: 30.05.2013 JP 2013114096
(71) Applicant: Panasonic Corporation, Kadoma-shi Osaka 571-8501 (JP)
(72) Inventor: Takemoto, Yuichiro, Osaka, 540-6207 (JP); Hirakawa, Kunio, Osaka, 540-6207 (JP); Uno, Yoshinobu, Osaka, 540-6207 (JP); Nakahata, Yuichi, Osaka, 540-6207 (JP)
(74) Representative: Unland, Jochen Hermann

(57) **Abstract**

A customer category analysis device includes: a customer category identification unit that identifies a customer category of each person appearing in an imaging region defined such that an image of each customer moving from a waiting area of the commercial establishment toward a seating area is captured from a front of the customer and obtains customer category information indicating a result of customer category identification; and a filtering unit that, based on a mode of behavior of each person appearing in the imaging region, determines whether the person is to be included in the analysis according to a predetermined criteria for limiting persons to be included in the analysis to customers who exhibit a behavior of moving toward the seating area, and excludes the person from the analysis if the person is determined not to be included in the analysis.

## Description

### TECHNICAL FIELD

The present invention relates to a customer category analysis device, customer category analysis system and customer category analysis method for analyzing customer categories of customers visiting a commercial establishment.

### BACKGROUND OF THE INVENTION

There are a variety types of commercial establishments including restaurants such as casual dining restaurants, retail stores such as convenience stores, etc. Irrespective of the types of commercial establishments, customers of different customer categories (gender, age, etc.) tend to prefer different foods or goods, and therefore, developing measures for improving the menu or the assortment of goods provided at the commercial establishment based on a result of analysis of the customer categories of the customers visiting the commercial establishment is beneficial to improve the customer satisfaction and increase the sales of the commercial establishment.

To meet such a need, it is known conventionally to use image recognition technology to identify the category of each customer in a retail store such as a convenience store and generate customer category-added sales information, in which a customer category is associated with the sales information of an individual good purchased by the customer (see JP2010-055248A). In comparison with an approach in which a salesperson determines and enters the category of each customer, this technology can reduce the burden of the salesperson and avoid variation in the determination made by the salesperson.

In a retail store such as a convenience store, customers pay for their purchases at a checkout counter in front of a salesperson one customer at a time, and image capture for customer category identification in the conventional technology is performed on each customer while the customer is paying substantially in a stationary state in front of the checkout counter. Therefore, the customer category identification can be performed with high accuracy and the number of customers in each category can be obtained without a substantial error. On the other hand, with regard to a restaurant such as a casual dining restaurant, in a case where customers visit the restaurant in a group, it is often the case that some member(s) in the group pays for all their orders including those of the other members in the group, and therefore, the customer category identification performed at the time of checkout may fail to detect the customers who do not have to check out at the checkout counter. Thus, customer category data may not be obtained with sufficient accuracy.

To prevent failure to detect customers in the customer category identification, it may be conceived to perform customer category identification on each customer entering through the doorway of the restaurant. However, in restaurants such as casual dining restaurants, restaurant staff members may come and go around the doorway, customers who have already been ushered to the table may pass by near the doorway or customers may stay for a while near the doorway during checkout. In such cases, persons on whom customer category identification is performed will include staff members and customers on whom customer category identification should not be performed, and thus, analysis of customer categories of the customers cannot be performed with high accuracy.

To solve such a problem, it is necessary to detect persons on whom customer category identification should not be performed, and as technology relating to such a demand, it is known conventionally to determine a person who stays still in a specified area for more than a predetermined time period to be a staff member, thereby distinguishing staff members from customers (see JP2011-086045A). In another known technology, features of faces of persons are extracted and compared with each other to avoid counting the same person more than once (see JP2005-234947A). Further, a technology is known which distinguishes between overlapping persons by use of parallax between multiple imaging devices to obtain the number of passers-by with high accuracy (see JPH10-049718A). Yet further, a technology is known which determines whether persons appearing in and disappearing from captured images correspond to a same person or different persons based on the positions of appearance and disappearance, to thereby avoid counting the same person more than once or failing to count different persons (see JP2008-035095A).

However, in restaurants such as casual dining restaurants, customers and staff members moving in the restaurant may be mingled. When the aforementioned conventional technology is applied, it is necessary to track each person moving in the restaurant over a wide area, and this makes the process quite complicated. Further, even if the tracking area is limited to an area around the doorway of the restaurant, there still is a problem that in cases where staff members may come and go around the doorway, customers who have already been ushered to the table may pass by near the doorway or customers may stay for a while near the doorway during checkout, as described above, the aforementioned conventional technologies cannot satisfactorily meet the demand to detect staff members and customers to be excluded from the analysis with high accuracy.

### SUMMARY OF THE INVENTION

In view of the aforementioned problems in the prior art, a primary object of the present invention is to provide a customer category analysis device, customer category analysis system and customer category analysis method configured to be able to avoid including staff members of a commercial establishment in the analysis and avoid including the same customer more than once in the analysis, such that the analysis of the customer categories of the customers visiting the commercial establishment is performed with high accuracy.

To achieve the aforementioned object, in a first aspect of the present invention, there is provided a customer category analysis device for analyzing customer categories of customers visiting a commercial establishment, including: a customer category identification unit configured to identify a customer category of each person appearing in an imaging region defined such that an image of each customer moving from a waiting area near a doorway of the commercial establishment toward a seating area is captured from a front of the customer, and obtain customer category information indicating a result of customer category identification; a filtering unit configured to, based on a mode of behavior of each person appearing in the imaging region, determine whether the person is a customer to be included in the analysis according to a predetermined determination criteria for limiting persons to be included in the analysis to customers who exhibit a mode of behavior of moving toward the seating area, and exclude the person from the analysis if the person is determined not to be included in the analysis; a totaling unit configured to total the customer category information obtained by the customer category identification unit for persons selected by the filtering unit; and an output information generation unit configured to generate output information representing a result of analysis based on a result of totaling by the totaling unit.

The behavior of moving from the waiting area near the doorway of the commercial establishment to the seating area is a behavior that must be exhibited only once by each customer who has entered the commercial establishment. In the above structure, persons exhibiting a behavior other than such behavior are detected and excluded from the analysis, whereby it is possible to avoid including a person (such as a staff member) who is not a customer in the analysis and including the same customer more than once in the analysis. This allows analysis of the customer categories to be performed with high accuracy, thereby providing information useful in developing measures for improving the customer satisfaction and increasing the sales and profit.

In a second aspect of the present invention, the filtering unit determines whether each person appearing in the imaging region is a customer to be included in the analysis by making a stay determination, which is a determination of whether each person appearing in the imaging region is in a staying state.

It is likely that a person in a staying state is a customer present in the waiting area while waiting for seating or a customer waiting for checkout, etc. near the checkout counter. Thus, by determining that a person in a staying state is a person to be excluded from the analysis, it is possible to avoid including the same customer more than once in the analysis.

In a third aspect of the present invention, the filtering unit determines whether each person appearing in the imaging region is a customer to be included in the analysis by making a movement path determination, which is a determination of whether a movement path of the person appearing in the imaging region is different from a movement path assumed of a customer to be included in the analysis.

In a case where the movement path of a person appearing in the imaging region is different from the movement path assumed of a customer to be included in the analysis, it is likely that the person is not a customer or a customer to be excluded from the analysis. Thus, by determining that the person with such a movement path is a person to be excluded from the analysis, it is possible to prevent a person who is not a customer or a customer to be excluded from the analysis from being included in the analysis.

In a fourth aspect of the present invention, the filtering unit divides the persons appearing in the imaging region into groups and determines whether each person appearing in the imaging region is a customer to be included in the analysis based on a determination of whether each group consists of a single person.

It is likely that a person constituting a group alone or a person who moves alone is not a customer being ushered by a staff member to the seating area. Thus, by determining that a person who moves alone is a person to be excluded from the analysis, it is possible to prevent a person who is not a customer or a customer to be excluded from the analysis from being included in the analysis.

In a fifth aspect of the present invention, the filtering unit divides the persons appearing in the imaging region into groups and determines whether each person appearing in the imaging region is a customer to be included in the analysis by making a group front determination, in which it is determined, when a group consisting of a plurality of persons is detected, whether each person in the group is a person who exits the imaging region first in the group.

It is likely that a person who exits the imaging region first in the group is a staff member who moves at the front of the group to usher the customer(s) in the group to the seating area. Thus, by determining that such a person is a person to be excluded from the analysis, it is possible to avoid including staff members in the analysis.

In a sixth aspect of the present invention, the filtering unit makes the stay determination based on a determination of whether the person exits a determination area defined in the imaging region.

According to this structure, by defining the determination area for the stay determination in the imaging region appropriately in accordance with the circumstances in and around the imaging region, customers who should not be included in the analysis can be excluded from the analysis with high accuracy.

In a seventh aspect of the present invention, the filtering unit makes the movement path determination based on a state of intersection of the movement path of each person appearing in the imaging region with a determination line defined on a boundary of the imaging region.

According to this structure, the movement path determination can be made simply by referring to a state of intersection of the movement path of the person with the determination line(s), and thus, it is possible to carry out the movement path determination easily, while ensuring sufficient accuracy.

In an eighth aspect of the present invention, the filtering unit obtains a direction of movement of each person immediately after the person has entered the imaging region, and based on the direction of movement, estimates an entry point to the imaging region, wherein the filtering unit obtains a direction of movement of each person immediately before the person leaves the imaging region, and based on the direction of movement, estimates an exit point from the imaging region, and wherein the filtering unit makes the movement path determination by determining whether the obtained entry point and exit point are on the determination line.

According to this structure, the movement path determination can be made by estimating an entry point to and an exit point from the imaging region and determining whether the entry point and exit point are located on the determination lines, and thus, it is possible to carry out the movement path determination out even more easily while ensuring sufficient accuracy.

In a ninth aspect of the present invention, the filtering unit divides the persons appearing in the imaging region into groups based on intervals between times of detection of the persons detected sequentially in the imaging region.

According to this structure, it is possible to perform grouping of persons easily with sufficient accuracy. In this structure, preferably, the interval between detection times of each two persons detected consecutively in the imaging region is compared with a predetermined threshold value, such that when the interval exceeds the threshold value, it is determined that the two persons belong to different groups.

In a tenth aspect of the present invention, the filtering unit obtains an amount of movement of each person immediately before exiting the imaging region, and based on the amount of movement, estimates a time when the person exited the imaging region.

According to this structure, the time when the person exits the imaging region can be estimated easily with sufficient accuracy. In this structure, preferably, an amount of movement per unit time is obtained based on the position where the person of interest was last detected in the imaging region and the position where the person was detected in the imaging region immediately before the last detection, and the time when the person exited the imaging region is estimated based on the amount of movement per unit time.

In an eleventh aspect of the present invention, the output information generation unit generates, as the output information, customer category trend information relating to a trend of change in the number of customers in each category based on a time series of number of customers in each category obtained for every predetermined time period.

According to this structure, a user can know how the customer category characteristics change depending on the time slot (predetermined time period). Therefore, by making preparations at the commercial establishment in accordance with the change in the customer category characteristics, it is possible to improve the customer satisfaction and increase the sales and profit.

In a twelfth aspect of the present invention, the customer category trend information represents a ratio of the number of customers in each category to a total number of customers obtained every said predetermined time period within daily opening hours of the commercial establishment.

According to this structure, a user can know how the total number of customers and the number of customers in each category change depending on the time period, where the number of customers in each category provides a breakdown of the total number of customers.

In a thirteenth aspect of the present invention, the customer category information includes at least one of gender and age.

According to this structure, customer category analysis can be performed with high accuracy based on the customer categories defined based on either gender or age or on both gender and age.

In a fourteenth aspect of the present invention, there is provided a customer category analysis system for analyzing customer categories of customers visiting a commercial establishment, including: an imaging device capturing images of customers; and a plurality of information processing devices, wherein the plurality of information processing devices jointly includes: a customer category identification unit configured to identify a customer category of each person appearing in an imaging region defined such that an image of each customer moving from a waiting area near a doorway of the commercial establishment toward a seating area is captured from a front of the customer ,and obtain customer category information indicating a result of customer category identification; a filtering unit configured to, based on a mode of behavior of each person appearing in the imaging region, determine whether the person is a customer to be included in the analysis according to a predetermined determination criteria for limiting persons to be included in the analysis to customers who exhibit a mode of behavior of moving toward the seating area, and exclude the person from the analysis if the person is determined not to be included in the analysis; a totaling unit configured to total the customer category information obtained by the customer category identification unit for persons selected by the filtering unit; and an output information generation unit configured to generate output information representing a result of analysis based on a result of totaling by the totaling unit.

According to this structure, it is possible to perform analysis on the customer categories of the customers with high accuracy, similarly to the structure in the first aspect of the present invention.

In a fifteenth aspect of the present invention, a customer category analysis method for analyzing customer categories of customers visiting a commercial establishment by use of an information processing device set up inside or outside the commercial establishment, including: identifying a customer category of each person appearing in an imaging region defined such that an image of each customer moving from a waiting area near a doorway of the commercial establishment toward a seating area is captured from a front of the customer, and obtaining customer category information indicating a result of customer category identification; determining, based on a mode of behavior of each person appearing in the imaging region, whether the person is to be included in the analysis according to a predetermined determination criteria for limiting persons to be included in the analysis to customers who exhibit a mode of behavior of moving toward the seating area, and excluding the person from the analysis if the person is determined not to be included in the analysis; totaling the customer category information obtained by the customer category identification unit for persons determined to be included in the analysis; and generating output information representing a result of analysis based on a result of totaling.

According to this structure, it is possible to perform analysis on the customer categories of the customers with high accuracy, similarly to the structure in the first aspect of the present invention.

### BRIEF DESCRIPTION OF THE DRAWINGS

Now the present invention is described in the following in terms of preferred embodiments thereof with reference to the appended drawings, in which:
FIG. 1 is a diagram showing an overall structure of a customer category analysis system according to an embodiment of the present invention;
FIG. 2 is a plan view showing an example of an interior layout of a restaurant;
FIG. 3 is a plan view for explaining a movement path of a customer to be included in the analysis;
FIG. 4 is an explanatory diagram showing an image captured by a camera 1;
FIG. 5 is a block diagram schematically showing a functional structure of a PC 3 set up at the restaurant;
FIG. 6 is an explanatory diagram showing an example of an analysis result screen displaying customer category trend information;
FIG. 7 is a block diagram schematically showing a structure of an image analysis unit 33 and a filtering unit 35;
FIG. 8 is an explanatory diagram showing an example of a set of tracking ID data included in log data output from the image analysis unit 33;
FIG. 9 is an explanatory diagram showing an example of a set of tracking ID data included in log data output from a the individual behavior assessment unit 56;
FIGS. 10A and 10B are explanatory diagrams for explaining a mode of behavior of a customer to be included in the analysis;
FIGS. 11A and 11B are explanatory diagrams for explaining a mode of behavior of a person to be excluded from the analysis;
FIGS. 12A-12C are explanatory diagrams for explaining a mode of behavior of a person to be excluded from the analysis;
FIG. 13 is an explanatory diagram showing an example of a determination area defined in an imaging region to perform stay determination;
FIG. 14 is an explanatory diagram showing an example of determination lines defined in an imaging region to perform movement path determination;
FIG. 15 is an explanatory diagram showing an example of a result of movement path determination performed using the determination lines;
FIGS. 16A and 16B are explanatory diagrams for explaining how a process of estimating an entry point and an exit point is executed;
FIG. 17 is an explanatory diagram for explaining a mode of a grouping process executed by a grouping unit 63;
FIGS. 18A-18C are explanatory diagrams for explaining modes of movement of persons from near a doorway toward a seating area; and
FIG. 19 is an explanatory diagram for explaining a process of estimating a frame leaving time executed by a group front determination unit 65.

### DETAILED DESCRIPTION OF THE PREFERRED EMBODIMENTS

In the following, a description will be given of an exemplary embodiment of the present invention with reference to the drawings.

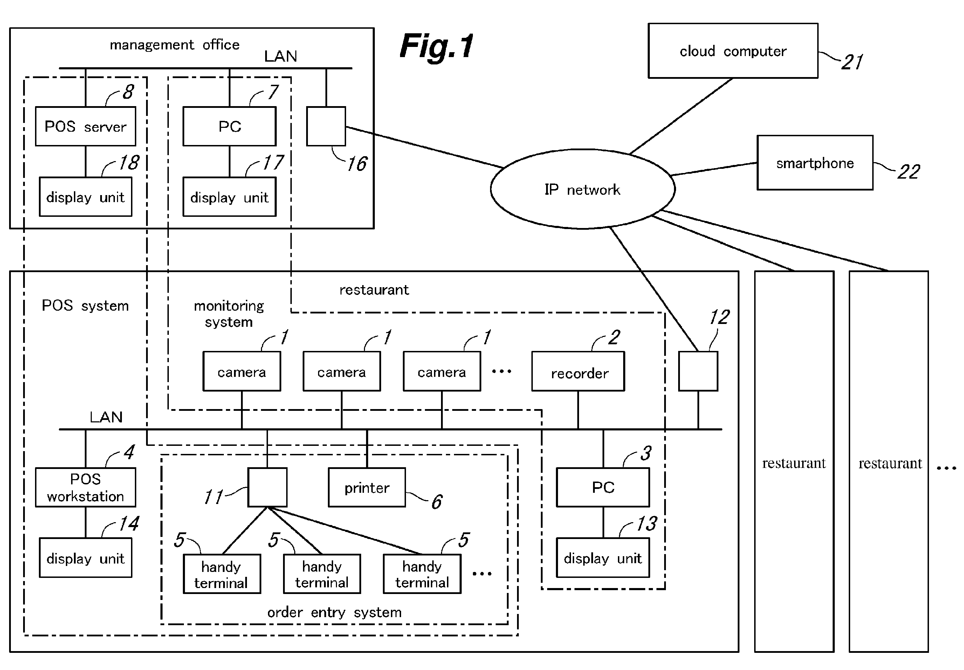

FIG. 1 is a diagram showing an overall structure of a customer category analysis system according to this embodiment. This customer category analysis system is designed for a casual dining restaurant chain, for example, and includes cameras (imaging device) 1, a recorder (image recording device) 2, a personal computer (PC) (customer category analysis device, browser device) 3, a point of sale (POS) workstation (sales information management device) 4, handy terminals (order entry device) 5, and a printer 6, which are set up at each of the multiple restaurants within the chain. Further, the customer category analysis system includes a PC (browser device) 7 and a POS server (sales information management device) 8, which are set up at a management office overseeing the multiple restaurants.

In each restaurant, the cameras 1, recorder 2, PC 3, POS workstation 4 and printer 6 are connected to a local area network (LAN) together with a wireless relay device 11 that relays the communication of the handy terminals 5 and a router 12 for connection with an Internet Protocol (IP) network. The PC 3 and the POS workstation 4 have respective display units (display devices) 13, 14 connected thereto. In the management office, the PC 7 and the POS server 8 are connected to a LAN together with a router 16 for connection with the IP network. The PC 7 and the POS server 8 have respective display units (display devices) 17, 18 connected thereto.

The cameras 1, recorder 2, PC 3 set up at each restaurant and PC 7 set up at the management office constitute a monitoring system for monitoring the interior of the restaurant. The cameras 1 are set up at appropriate locations in the restaurant to capture images of the various areas in the restaurant, and image information obtained thereby is recorded by the recorder 2. The PC 3 set up at the restaurant and the PC 7 set up at the management office can display the real-time images of various areas in the restaurant captured by the cameras 1 or the past images of various areas in the restaurant recorded by the recorder 2, and this allows a user at the restaurant or the management office to check the situation in the restaurant.

The handy terminals 5, wireless relay device 11 and printer 6 set up at each restaurant constitute an order entry system for accepting customer orders. Each handy terminal 5 is to be carried by a restaurant staff member (such as a waiter or a waitress), whereby the staff member, upon taking orders from customers, can enter the content of the orders (ordered menu items, number of orders for each menu item) into the handy terminal 5. The printer 6 is set up in the kitchen, and when the staff member enters order content into the handy terminal 5, the order content is output from the printer 6 so that the order content is communicated to the kitchen staff.

The POS workstation 4 and the order entry system set up at each restaurant and the POS server 8 set up at the management office constitute a POS (point of sale) system that manages sales information relating to the sales of each restaurant. This POS system manages, as the sales information, order content, order time, checkout time, order method, number of customers, etc. This sales information is shared between the POS workstation 4 and the POS server 8. The POS workstation 4 manages the sales information of the restaurant at which the POS workstation 4 is set up, and the POS server 8 manages the sales information of all member restaurants under its management.

Each handy terminal 5 constituting the order entry system is adapted to allow the restaurant staff member to enter order information other than the order content (ordered menu items, number of orders for each menu item), such as a number of customers sitting at a table, table number (seat number), etc., and the order information entered is transmitted to the POS workstation 4. In addition to the function for managing the sales information, the POS workstation 4 has a register function for performing checkout, and is set up at the checkout counter. This POS workstation 4 is connected with a cash drawer and a receipt printer not shown in the drawings. The POS workstation 4 generates sales information based on the order information transmitted from the handy terminals 5 and checkout information obtained at the time of checkout.

The PC 3 set up at the restaurant is configured to realize a customer category analysis device that performs analysis of the customer categories of customers visiting the restaurant. The analysis result information generated by the PC 3 set up at the restaurant can be displayed on the PC 3 itself, and also, is transmitted to the PC 7 set up at the management office, such that the information can be displayed on the PC 7. Thus, the PCs 3 and 7 are each configured to serve as a browser device that allows a user to view the analysis result information.

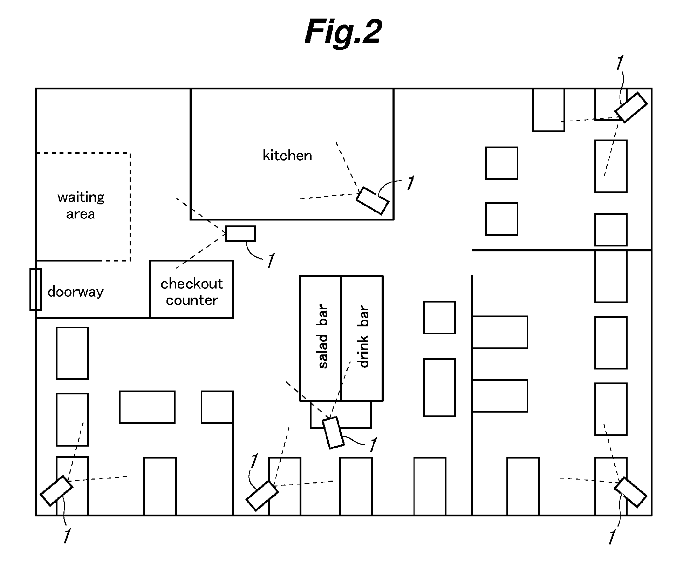

FIG. 2 is a plan view showing an example of an interior layout of a restaurant. The restaurant includes a doorway, a waiting area, a checkout counter, tables arranged in a seating area, a salad bar, a drink bar, and a kitchen. The salad bar and the drink bar are a buffet-style table or counter on which salad components and drinks are provided, respectively, for customers to serve themselves. Further, multiple cameras 1 are set up at appropriate locations in the restaurant. Specifically, in the example shown in FIG. 2, the cameras 1 are set up to capture images at the doorway, tables, salad bar and kitchen.

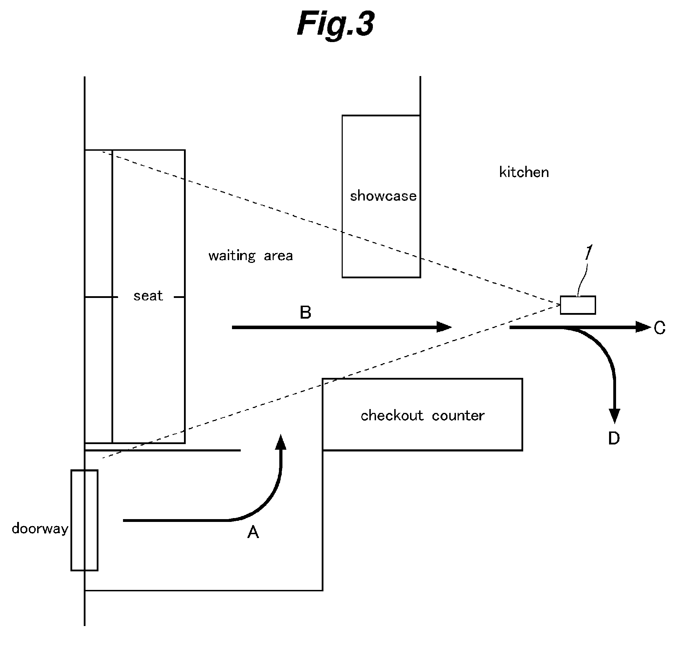

FIG. 3 is a plan view for explaining a movement path of a customer to be included in the analysis. A customer who has entered the restaurant through the doorway thereof advances as indicated by arrow A into the waiting area, and if all tables are occupied, waits for seating while sitting in the seat in the waiting area. When a table becomes available, the customer is ushered by a staff member and moves as indicated by arrow B, and thereafter, may advance straight as indicated by arrow C or may turn as indicated by arrow D depending on a position of the table to be seated.

In the present embodiment, one of the cameras 1 is set up to capture an image covering the waiting area from the seating area side, whereby an image of the face of each customer during move from the waiting area to the seating area as indicated by arrow B is captured by the camera 1 from the front of the customer and the customer moving from the waiting area toward the seating area is selected as a customer to be included in the analysis.

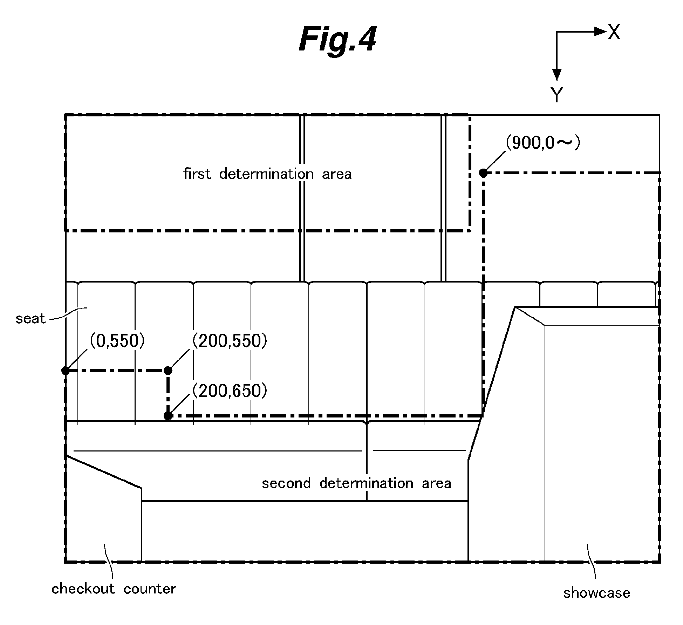

FIG. 4 is an explanatory diagram showing an image captured by the camera 1 shown in FIG. 3. As shown, at a central portion of the imaging region of the camera 1 is the seat set in the waiting area, and in front of a right portion of the seat is a part of a showcase for displaying menu items and in front of a left portion of the seat is a part of the checkout counter. As indicated by arrow A in FIG. 3, when a customer enters the restaurant through the doorway thereof, the customer enters the imaging region on the left. Further, as indicated by arrow B in FIG. 3, when the customer moves from the waiting area toward the seating area, the customer moves in the imaging region downward and leaves the imaging region.

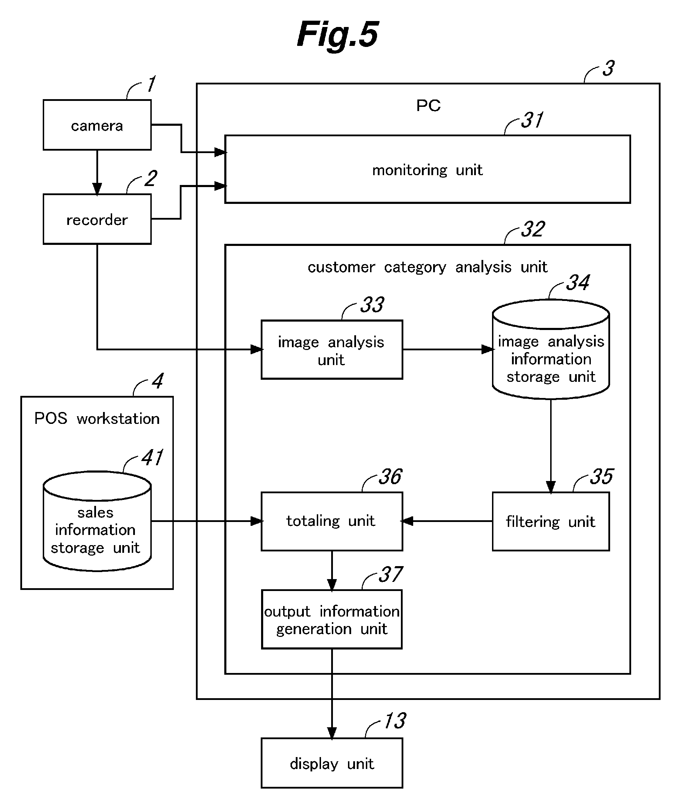

Next, a description will be given of the PC 3 (customer category analysis device) set up at a restaurant as shown in FIG. 1. FIG. 5 is a block diagram schematically showing a functional structure of the PC 3 set up at a restaurant.

The PC 3 includes a monitoring unit 31 and a customer category analysis unit 32. The monitoring unit 31 allows the PC 3 to function as a monitoring system for monitoring the interior of the restaurant. The monitoring unit 31 controls the operation of the cameras 1 and the recorder 2 and enables a user to have a real-time view of the images of various areas in the restaurant captured by the cameras 1 and to view the images of various areas in the restaurant recorded in the recorder 2. The customer category analysis unit 32 performs analysis of the customer categories of customers visiting the restaurant.

It is to be noted that the monitoring unit 31 and the customer category analysis unit 32 are realized by executing programs for monitoring and customer category analysis by the CPU of the PC 3. These programs may be pre-installed in the PC 3 serving as an information processing device to embody a device dedicated for monitoring and customer category analysis functions, or may be provided to a user in the form stored in an appropriate recording medium as an application program that can be run on a general-purpose OS.

Next, a description will be given of a customer category trend obtaining process executed by the customer category analysis unit 32 of the PC 3 set up at a restaurant. The customer category trend obtaining process is executed to obtain customer category trend information indicating a trend of change in the number of customers in each category depending on the time slot (predetermined time period).

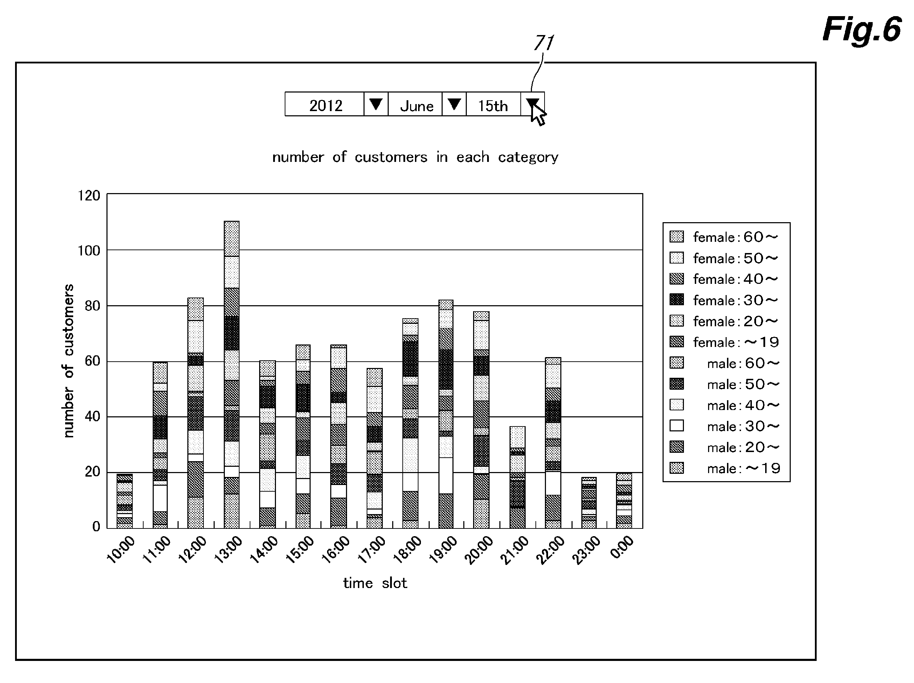

FIG. 6 is an explanatory diagram showing an example of an analysis result screen displaying customer category trend information. This analysis result screen is to be displayed on the display unit 13 of the PC 3 set up at the restaurant and the display unit 17 of the PC 7 set up at the management office. This analysis result screen includes a stacked bar chart that shows, as the customer category trend information, the number of customers in each category relative to the total number of customers for each time slot during opening hours of the restaurant (10:00 AM to 1:00 AM) on a designated date. From this analysis result screen, a user can understand the characteristics of a change in the total number of customers as well as the number of customers in each category depending on the time slot, where the number of customers in each category provides a breakdown of the total number of customers.

This analysis result screen further includes an operation element 71 for designating a year, month and day so that the user can choose a date by operating the operation element 71 and view the analysis result on the chosen date. It is to be noted that, in a case where the analysis result screen is displayed on the display unit 17 of the PC 7 set up at the management office, an operation element for allowing the user to select a restaurant is preferably displayed in the analysis result screen.

This analysis result screen is generated by a customer category trend obtaining process executed by the customer category analysis unit 32 of the PC 3. The customer category analysis unit 32 includes, as units relating to the customer category trend obtaining process, an image analysis unit 33, an image analysis information storage unit 34, a filtering unit 35, a totaling unit 36, and an output information generation unit 37, as shown in FIG. 5.

The image analysis unit 33 detects a person(s) in each frame (captured image) and identifies the customer category (gender and age) of each person appearing in the imaging region. Image analysis information (log data) obtained by the image analysis unit 33 is cumulatively stored in the image analysis information storage unit 34. The filtering unit 35 detects, of the persons detected by the image analysis unit 33, persons who should be excluded from the analysis in accordance with a predetermined criteria, and excludes the detected persons from the analysis.

The totaling unit 36 totals the customer category information of each person obtained by the image analysis unit 33 for the customers selected by the filtering unit 35. Specifically, in the present embodiment, the totaling unit 36 obtains the number of customers in each category for each time slot (predetermined unit time period) by counting the number of customers in each customer category based on the customer category of each customer included in the customer category information for each time slot (one hour), which defines a unit time period for totaling.

The output information generation unit 37 generates output information representing a result of analysis based on a result of totaling by the totaling unit 36. Specifically, in the present embodiment, the output information generation unit 37 generates customer category trend information (output information) relating to a trend of change in the number of customers in each category based on a time series of number of customers in each category obtained for each time slot (predetermined unit time period), such that an analysis result screen (see FIG. 6) in accordance with this customer category trend information is displayed on the display units 13 and 17 of the PCs 3 and 7.

It is to be noted that, the totaling unit 36 may obtain the number of customers in each category by extracting the customer category information of the customers selected by the filtering unit 35 from the customer category information obtained by the image analysis unit 33 for each person, and counting the number of customers in each category in each time slot based on the extracted customer category information. However, it is also possible to use the sales information provided by the POS system in obtaining the number of customers in each category.

Namely, it is possible to obtain, based on the customer category information relating to the customers selected by the filtering unit 35, customer category ratios for each time slot, while obtaining the number of customers (total number of customers) for each time slot based on the sales information retrieved from the sales information storage unit 41 (see FIG. 5) of the POS workstation 4, whereby the number of customers in each category for each time slot is obtained by reflecting the customer category ratios for each time slot on the number of customers for the corresponding time slot, namely, by multiplying the number of customers (total number of customers) for each time slot by the ratio of each customer category for the corresponding time slot. In this way, the accuracy of the number of customers in each category can be improved further by use of the sales information provided by the POS system, which has high accuracy.

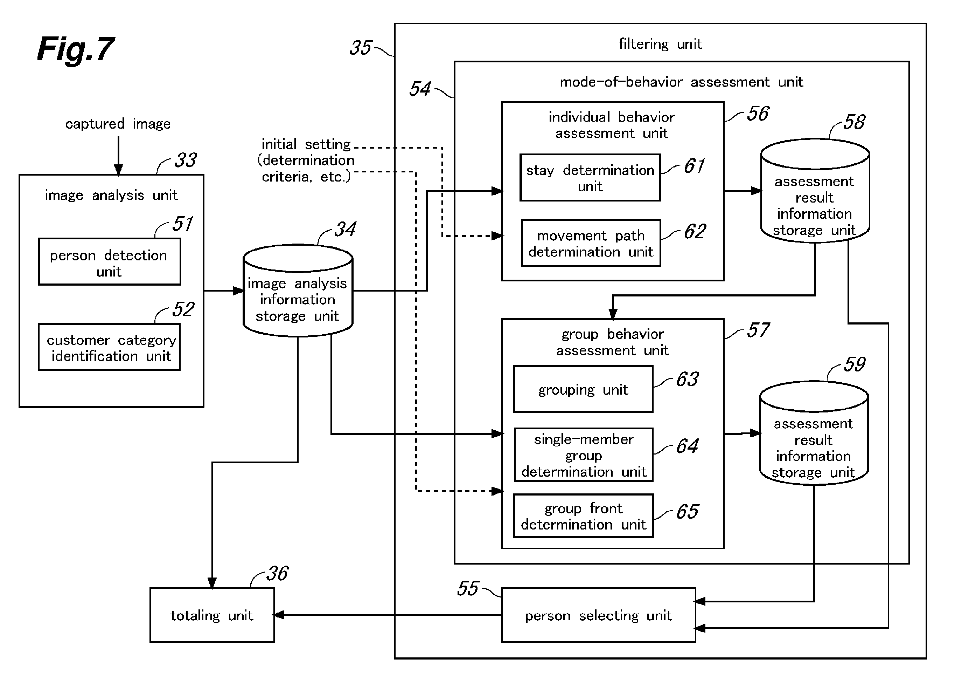

Next, a description will be given of the image analysis unit 33 and the filtering unit 35 shown in FIG. 5. FIG. 7 a block diagram schematically showing a structure of the image analysis unit 33 and the filtering unit 35.

The image analysis unit 33 detects a person(s) in a frame (captured image) and identifies the customer category of each person appearing in an imaging region thereof. The image analysis unit 33 includes a person detection unit 51 and a customer category identification unit 52. In the image analysis unit 33, known image recognition technology (person recognition technology, person tracking technology, face recognition technology, gender and age estimation technology, etc.) may be used.

The person detection unit 51 determines whether an object(s) detected in each frame captured by the camera 1 is a person by use of known person recognition technology and executes a process of tracking the person(s) moving between multiple frames by use of known person tracking technology.

The customer category identification unit 52 detects a region of a face image of each person detected by the person detection unit 51 and estimates the gender and age of the person based on the face image. In the face detection process, known face recognition technology is used to collect multiple face images of each person from multiple frames based on the result of person tracking performed by the person detection unit 51. In the gender and age estimation process, known gender and age estimation technology is used to estimate the customer category (gender and age) of each person from the face images of the person collected by the face detection process.

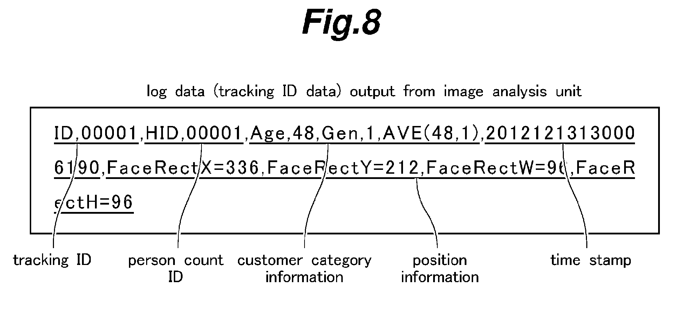

FIG. 8 is an explanatory diagram showing an example of a set of tracking ID data included in log data output from the image analysis unit 33 shown in FIG. 7.

The log data output from the image analysis unit 33 is constituted of sets of tracking ID data generated every time a person object is detected in a time series of sequential frames (captured images), where each set of tracking ID data includes tracking ID, person count ID, customer category information, timestamp (time information), and position information. This log data is output as a log file of a predetermined format (e.g., CSV) and stored in an assessment result information storage unit 58.

A tracking ID is assigned to each person object detected in each frame (captured image). When it is determined that two or more person objects detected in different frames represent the same person based on the features of the faces of the person objects, an identical tracking ID is assigned to these person objects. A person count ID is assigned to a tracking ID when the person object assigned the tracking ID is detected three times consecutively. Customer category information represents the age and gender (e.g., 0 for male, 1 for female) of a person obtained as a result of the determination by the customer category identification unit 52 and an average value of the age and gender information contained in the sets of tracking ID data collected in the past for the same tracking ID. Timestamp indicates the time of capture of the frame (captured image), namely, the time when a person was detected (year, month, day, hour, minute, second, millisecond). Position information indicates the position of a face image frame detected in the frame (captured image). In the present embodiment, the position information includes an X-coordinate value and Y-coordinate value of the center of a face image frame (rectangular region) and the width and height of the face image frame.

Next, a description will be given of the filtering unit 35 shown in FIG. 7.

The filtering unit 35 detects, according to a predetermined criteria, persons to be excluded from the analysis from among the persons detected by the image analysis unit 33 and excludes the detected persons from the analysis. The filtering unit 35 includes a mode-of-behavior assessment unit 54 and a person selecting unit 55.

The mode-of-behavior assessment unit 54 determines, according to a predetermined determination criteria based on the mode of behavior of customers to be included in the analysis, whether each person appearing in the imaging region is to be included in the analysis based on the mode of behavior of the person. The mode-of-behavior assessment unit 54 includes an individual behavior assessment unit 56 and a group behavior assessment unit 57. The individual behavior assessment unit 56 assesses the individual mode of behavior of each person appearing in the imaging region. The group behavior assessment unit 57 divides the persons appearing in the imaging region into groups and assesses the mode of behavior of each person included in each group.

The person selecting unit 55 excludes from the analysis persons who should be excluded from the analysis based on the log data output from the mode-of-behavior assessment unit 54. In other words, the person selecting unit 55 executes a process of selecting persons to be included in the analysis. The log data output from the mode-of-behavior assessment unit 54 contains information relating to the result of assessment performed by the mode-of-behavior assessment unit 54, and persons to be excluded from the analysis are detected according to a user-defined criteria based on the assessment result information included in the log data.

It is to be noted that, in the mode-of-behavior assessment unit 54, it is possible that the individual behavior assessment unit 56 and the group behavior assessment unit 57 separately perform the individual behavior assessment and the group behavior assessment, respectively, for persons detected by the image analysis unit 33, and the person selecting unit 55 selects persons to be included in the analysis based on the result of the assessment by these units 56 and 57. However, it is preferred that the group behavior assessment unit 57 perform the group behavior assessment after persons to be excluded from the analysis are removed based on the result of the assessment by the individual behavior assessment unit 56; namely, the group behavior assessment be performed for the persons determined to be customers to be included in the analysis by the individual behavior assessment. In this way, the computation load in performing the group behavior assessment can be reduced and the accuracy of the same can be improved.

It will be also preferred if the determination criteria, etc. in each of the individual behavior assessment unit 56 and the group behavior assessment unit 57 can be changed by a user in the initial setting.

Next, the individual behavior assessment unit 56 shown in FIG. 7 will be explained.

The individual behavior assessment unit 56 assesses the mode of behavior of each person individually. In this embodiment, the individual behavior assessment unit 56 focuses on a specific behavior that any customer who has entered the restaurant necessarily exhibits only once, and detects customers exhibiting the behavior as those to be included in the analysis, thereby making it possible to avoid including the same customer more than once in the analysis as well as avoid including restaurant staff members in the analysis. Specifically, in the present embodiment, as shown in FIG. 3, image capture is performed such that images of customers moving from near the doorway of the restaurant (namely, from the waiting area near the doorway) toward the seating area are captured from the front of the customers and the customers moving from near the doorway toward the seating area are determined as those to be included in the analysis, and the individual behavior assessment unit 56 detects customers moving from near the doorway toward the seating area.

The individual behavior assessment unit 56 includes a stay determination unit 61 and a movement path determination unit 62. The stay determination unit 61 executes a process of determining whether each person appearing in the imaging region is in a staying state, namely, a state being substantially still at the same position. The movement path determination unit 62 executes a process of determining whether the movement path of each person appearing in the imaging region is different from the movement path assumed of a customer to be included in the analysis.

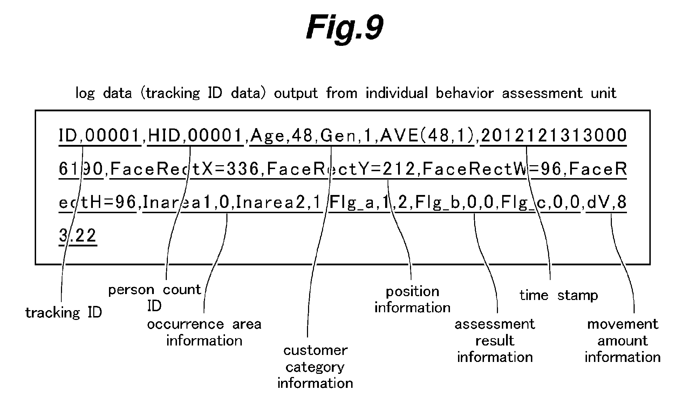

FIG. 9 is an explanatory diagram showing an example of a set of tracking ID data included in log data output from a the individual behavior assessment unit 56 shown in FIG. 7.

Each set of tracking ID data of the log data output from the individual behavior assessment unit 56 contains tracking ID, person count ID, customer category information, timestamp (time information), position information, occurrence area information, assessment result information and movement amount information. In the tracking ID data output from the individual behavior assessment unit 56, the tracking ID, person ID, customer category information, timestamp and position information are the same as those included in the tracking ID data input to the individual behavior assessment unit 56, while the occurrence area information, assessment result information and movement amount information, which are obtained as a result of the assessment by the individual behavior assessment unit 56, are additionally contained. The occurrence area information, assessment result information and movement amount information will be described in detail later. This log data is output as a log file of a predetermined format (e.g., CSV) and is cumulatively stored in an assessment result information storage unit 59.

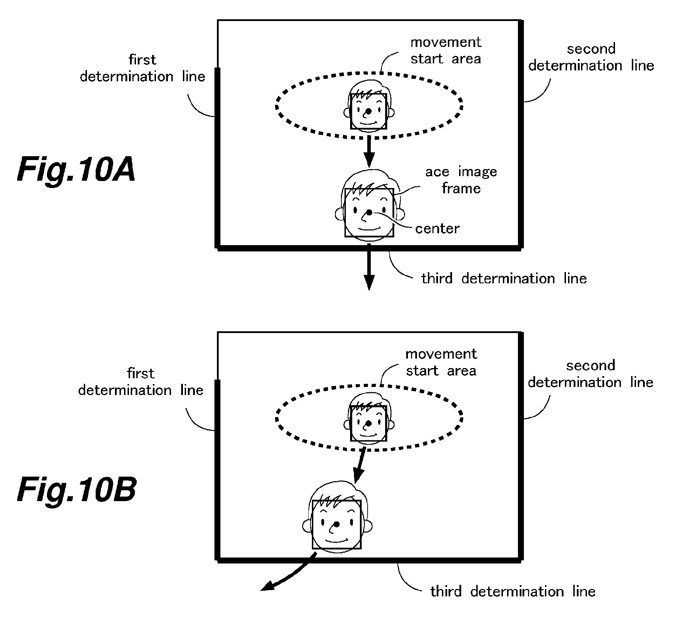

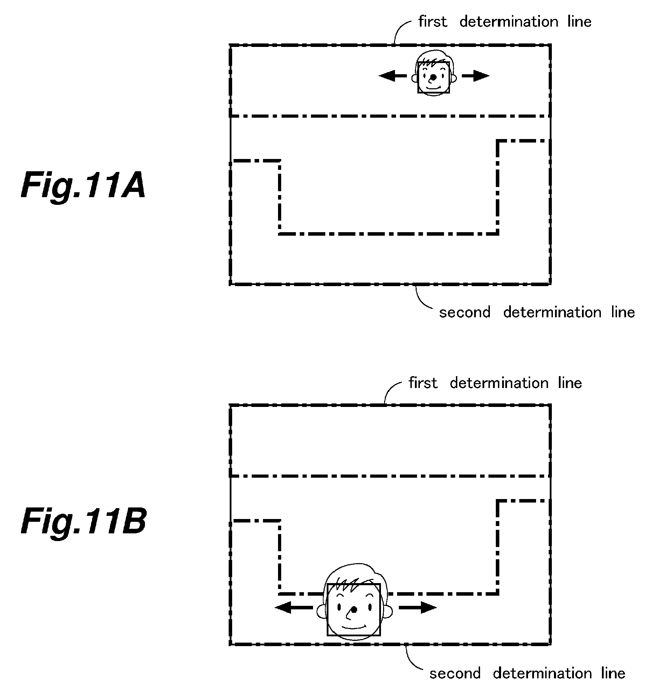

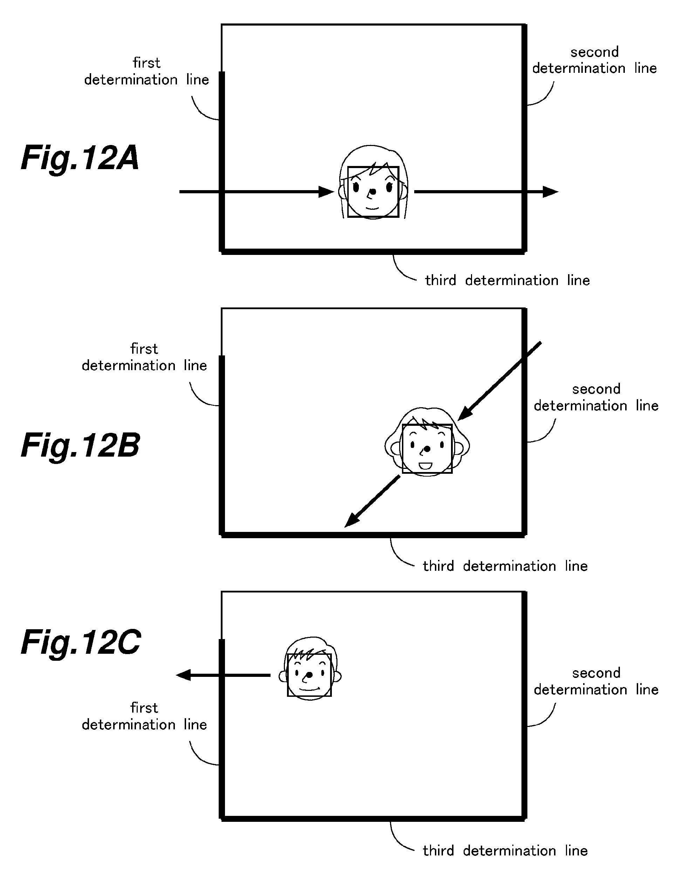

Next, description will be given of the process executed by the individual behavior assessment unit 56 shown in FIG. 7. FIGS. 10A and 10B are explanatory diagrams for explaining a mode of behavior of a customer to be included in the analysis. FIGS. 11A and 11B and FIGS. 12A-12C are explanatory diagrams for explaining a mode of behavior of a person to be excluded from the analysis.

In the present embodiment, as shown in FIG. 3, image capture is performed such that images of customers moving from near the doorway of the restaurant (namely, from the waiting area near the doorway) toward the seating area are captured from the front of the customers and the customers moving from near the doorway toward the seating area are determined as those to be included in the analysis. As shown in FIG. 10A, the customers moving from near the doorway toward the seating area commonly move from a central part of the imaging region toward a lower boundary of the imaging region. It is to be noted, however, that the direction of movement of the customer or the position from which the customer leaves the imaging region may vary somewhat from customer to customer; for example, in some cases a customer may leave the imaging region from a position on a left part of the lower boundary of the imaging region, as shown in FIG. 10B.

On the other hand, in a case where a person stays substantially still in an upper part of the imaging region as shown in FIG. 11A, or in a case where a person stays substantially still in a lower part of the imaging region as shown in FIG. 11B, the person is not considered a customer moving from near the doorway toward the seating area. For example, in a case where a person is a customer sitting in the seat in the waiting area while waiting for seating, the person exhibits the mode of behavior shown in FIG. 11A, while in a case where a person is a customer waiting for checkout in front of the checkout counter, the person exhibits the mode of behavior shown in FIG. 11B. Thus, a person who is substantially still at the same position is not a customer moving from near the doorway toward the seating area; namely, not a customer to be included in the analysis, and accordingly, in the present embodiment, a person in such a staying state is detected by the stay determination unit 61 of the individual behavior assessment unit 56.

Further, in a case where a person passes across the imaging region horizontally as shown in FIG. 12A or in a case where a person enters the imaging region on the right boundary thereof and passes across the imaging region obliquely as shown in FIG. 12B or in a case where a person leaves the imaging region on the left boundary thereof as shown in FIG. 12C, the person is not considered a customer moving from near the doorway toward the seating area. In a case where a person is a restaurant staff member moving around in the restaurant, such as the one who moves repeatedly between the kitchen and the seating area to deliver menu items and clear tables, for example, the person exhibits the mode of behavior shown in FIG. 12A. Further, in a case where a person is a customer who moves in the restaurant after having been ushered to the table, such as the one who goes to and comes back from the salad bar or toilet, for example, the person exhibits the mode of behavior shown in FIG. 12B. In a case where a person is a customer who is leaving the restaurant, the person exhibits the mode of behavior shown in FIG. 12C. In each case, the movement path is different from the movement path expected of a customer to be included in the analysis as shown in FIG. 10, and in the present embodiment, a person moving along a movement path different from that of a customer to be included in the analysis is detected by the movement path determination unit 62 of the individual behavior assessment unit 56.

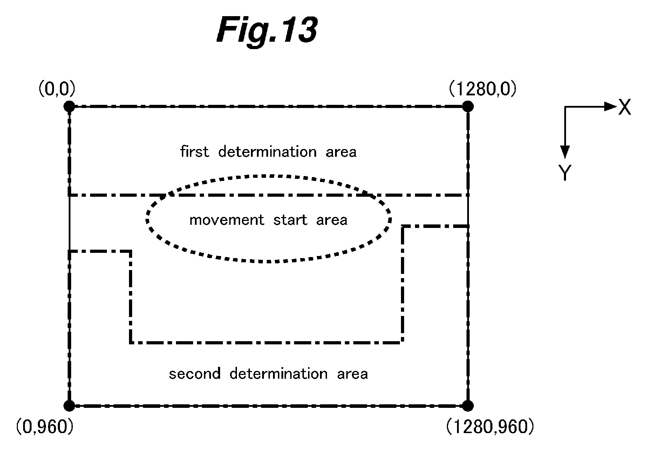

Next, a description will be given of stay determination performed by the stay determination unit 61 shown in FIG. 1. FIG. 13 is an explanatory diagram showing an example of a determination area defined in an imaging region to perform stay determination.

The stay determination unit 61 makes a stay determination, which is a determination of whether each person appearing in the imaging region is in a staying state or a state being substantially still at the same position, and thereby determines whether the person is a customer to be included in the analysis. Specifically, in the present embodiment, a determination area is defined in the imaging region and the stay determination is performed based on whether a person exits the determination area. In other words, a person who does not move out from the determination area is determined to be a person in a staying state.

Specifically, when, after a person appeared in one determination area anew, the person disappeared in the same determination area, namely, when the positions where the person was detected are all in the same determination area, it is determined that the person is in a staying state.

In the example shown in FIG. 13, a movement start area is defined in a central part of the imaging region, and a first determination area and a second determination area are defined above and below the movement start area, respectively.

Each determination area has a polygonal shape formed of sides (boundary lines) parallel to either one of the coordinate axes (x-axis and y-axis) respectively extending along two mutually perpendicular sides of the rectangular captured image, so that the computation load in executing the stay determination process is reduced. In the present embodiment, the maximum number of sides of each determination area is 8 (eight), and up to two determination areas can be defined. In the example shown in FIG. 13, the imaging region is defined to have an image size of 4 VGA (1280 x 960), with the upper left corner point of the imaging region being the origin.

The first determination area is defined to detect a customer who is staying in the waiting area while waiting for seating. In the present embodiment, as shown in FIG. 3, the waiting area is provided near the doorway, and the first determination area is defined such that the face of a customer who is in the waiting area while waiting for seating is positioned in the first determination area.

The second determination area is defined to detect a customer who is staying at a position in front of the waiting area. In the present embodiment, as shown in FIG. 3, a checkout counter and a showcase are located in front of the waiting area on left and right sides as seen from the camera 1, and the second determination area is defined such that the face of a customer waiting for checkout in front of the checkout counter and the face of a customer looking at the showcase are positioned in the second determination area. As a result, in the present embodiment, the imaging region includes left and right areas where a customer may stay, and the second determination area is defined to have a concave shape to include these areas.

It is to be noted that in the example shown in FIG. 13, the first determination area is defined so as to extend over the entire width of an upper part of the imaging region, while in the example shown in FIG. 4, the first determination area is defined in an upper left part of the imaging region. Thus, the position and extension of the determination area may be defined appropriately by a user depending on the circumstances in and around the imaging region.

The process executed by the stay determination unit 61 is executed for each person (tracking ID), and the result of the determination made by the stay determination unit 61 is reflected on the occurrence area information (the first flag (Inareal, x) and second flag (Inarea2, x)) and the first flag (Flg a, x, y) of the assessment result information of each set of tracking ID data of the log data, as shown in FIG. 9.

The occurrence area information relates to the determination area in which the person (tracking ID) appeared the first time. The first flag (Inareal, x) indicates whether the position at which the person appeared the first time is within the first determination area, and the x value thereof is set to 1 (one) when the position at which the person appeared the first time is within the first determination area, and 0 (zero) when not. The second flag (Inarea2, x) indicates whether the position at which the person appeared the first time is within the second determination area, and the x value thereof is set to 1 (one) when the position at which the person appeared the first time is within the second determination area, and 0 (zero) when not.

The first flag (Flg a, x, y) of the assessment result information relates to the stay determination. The x value of this first flag indicates whether a stay determination criteria is met, and is set to 1 (one) when the stay determination criteria is met, and 0 (zero) when not. The y value of the first flag specifies the determination area where the stay determination criteria is met, and is set to a value corresponding to the determination area where the stay determination criteria is met. In this embodiment, up to two determination areas can be defined, and the y value is set to 1 or 2 respectively corresponding to the two determination areas. If the stay determination criteria is not met, the y value is set to 0 (zero).

As described above, in the present embodiment, a person in a staying state can be determined to be a customer present in the waiting area while waiting for seating or a customer waiting for checkout, etc. near the checkout counter, and by excluding these customers in the analysis, it is possible to avoid including the same customer more than once in the analysis.

Further, in the present embodiment, the determination area(s) for determining whether a person is in a staying state is defined in the imaging region in accordance with circumstances of the imaging region, and thus, customers to be excluded from the analysis can be detected with high accuracy.

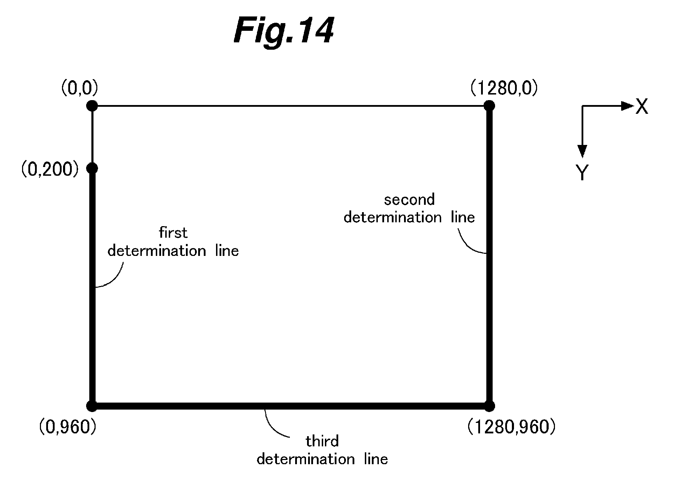

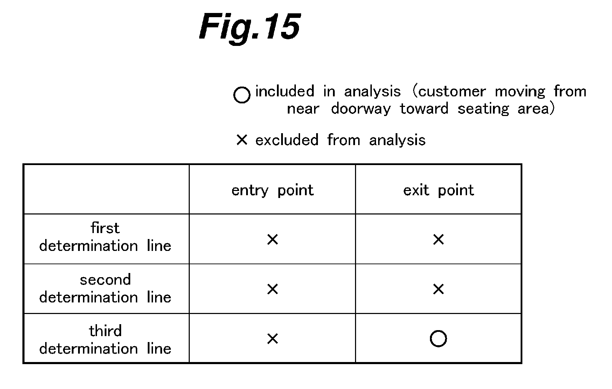

Next, a description will be given of movement path determination performed by the movement path determination unit 62 shown in FIG. 7. FIG. 14 is an explanatory diagram showing an example of determination lines defined in an imaging region to perform movement path determination. FIG. 15 is an explanatory diagram showing an example of a result of movement path determination performed using the determination lines.

The movement path determination unit 62 makes a movement path determination, which is a determination of whether the movement path of a person appearing in the imaging region is different from the movement path assumed of a customer to be included in the analysis, and thereby determines whether the person is a customer to be included in the analysis. Specifically, in the present embodiment, as shown in FIG. 14, determination lines are defined on outer boundaries of the imaging region and the movement path determination is made based on a state of intersection of the movement path of a person appearing in the imaging region with the determination lines.

In the present embodiment, the determination lines are defined on the lower, left and right boundaries of imaging region. Namely, a first determination line, a second determination line and a third determination line are defined on three sides (other than the upper side) of the four sides of the rectangular captured image.

In the example shown in FIG. 14, the first determination line on the left is defined to extend from an upper middle position (0, 200) to a lower end position (0, 960) on the left boundary of the imaging region. The second determination line on the right is defined to extend over the entirety of the right boundary of the imaging region. The third determination line on the lower side is defined to extend over the entirety of the lower boundary of the imaging region.

In the present embodiment, as shown in FIG. 3, customers moving from near the doorway toward the seating area are determined as those to be included in the analysis. As shown in FIG. 10, each customer to be included in the analysis, namely, each customer moving from near the doorway to the seating area starts moving from a movement start area defined in a central part of the imaging region and exits the imaging region through the third determination line defined on the lower boundary of the imaging region.

Therefore, in a case of a customer to be included in the analysis, namely, a customer moving from near the doorway toward the seating area, the movement path of the customer necessarily crosses the third determination line on the lower side, and does not cross the first determination line on the left nor the second determination line on the right. In other words, in a case of a customer moving from near the doorway toward the seating area, the exit point from which the customer leaves the imaging region is necessarily on the third determination line and never be on the first determination line on the left or the second determination line on the right.

On the other hand, in a case of a staff member who moves around in the restaurant to perform work such as delivery of menu items to tables, if the staff member moves across the imaging region horizontally from left to right as shown in FIG. 12A, the movement path intersects both the first determination line on the left and the second determination line on the right, with the entry point being on the first determination line and the exit point being on the second determination line. In a case of a customer who moves in the restaurant after having been ushered to the table, if the customer traverses the imaging region obliquely from the right side to the lower side as shown in FIG. 12B, the movement path intersects the second determination line on the right and the third determination line on the lower side, with the entry point being on the second determination line and the exit point being on the third determination line. Further, in a case of a customer leaving the restaurant, because the doorway is to the left of the imaging region in the present embodiment, the movement path crosses the first determination line on the left and the exit point is on the first determination line, as shown in FIG. 12C.

As described above, when the exit point is not on the third determination line, it can be determined that the person is not a customer moving from near the doorway toward the seating area, namely, the person is not a customer to be included in the analysis. Further, when the entry point is on one of the first to third determination lines, it can be determined that the person is not a customer moving from near the doorway toward the seating area, namely, the person is a person to be excluded from the analysis (see FIG. 15).

It is to be noted that in the present embodiment, the movement path determination is made based on the positions of a person in a predetermined reference time period (e.g., 2 sec) immediately before the time when the person left the imaging region (frame leaving time), and therefore, the entry point is assessed in the movement path determination only when the time period from when the person entered the imaging region to when the person left the imaging region does not exceed the reference time period, that is, when the person left the imaging region soon after entering the same. On the other hand, in a case of a customer to be included in the analysis, namely, a customer moving from near the doorway toward the seating area, the customer normally stays near the doorway for more than the reference time period, and therefore, the behavior of the customer before the start of moving from the movement start area as well as the entry point is not assessed in the moving path determination. Thus, a person whose entry point is assessed in the movement path determination can be considered not a customer to be included in the analysis.

As described in the foregoing, in the present embodiment, though the assessment of the entry point based on the determination lines can detect a person to be excluded from the analysis, it cannot positively identify a customer to be included in the analysis. However, under certain circumstances in and around the imaging region, the assessment of the entry point based on the determination lines may significantly contribute to identifying customers to be included in the analysis if the determination lines defined on the boundary of the imaging region are appropriately defined.

It is to be noted that, an appropriate determination criteria for determining whether the person is to be included in the analysis based on the relationship of the entry point and/or the exit point to the first to third determination lines may be varied depending on the circumstances in and around the imaging region, and therefore, it is preferred that the determination criteria can be defined by a user. Further, an appropriate extension of each determination line defined on the boundary of the imaging region may vary depending on the circumstances in and around the imaging region, and thus, it is preferred that the extension of each determination line can be set by a user.

Next, a description will be given of a process of estimating an entry point and an exit point executed by the movement path determination unit 62 shown in FIG. 7.

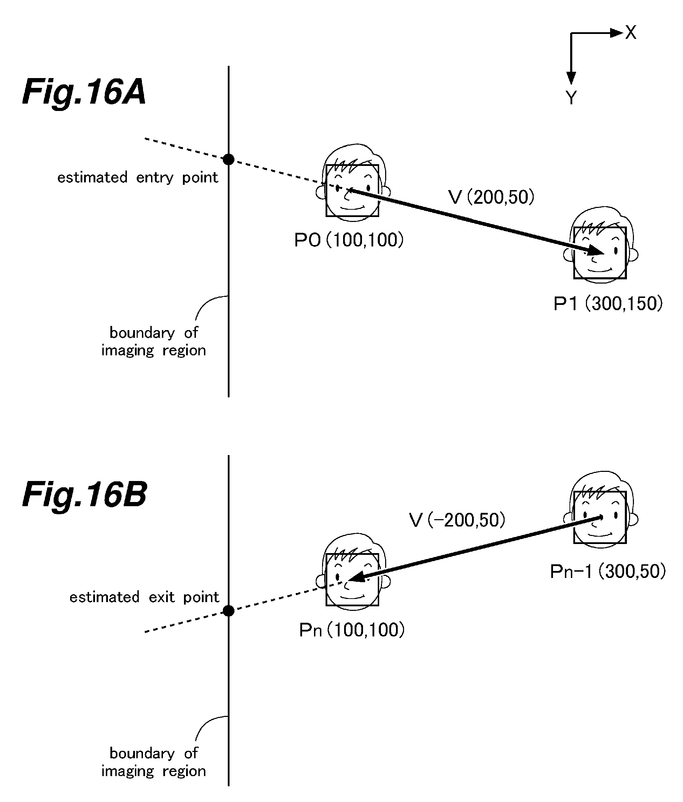

FIGS. 16A and 16B are explanatory diagrams for explaining how the process of estimating an entry point and an exit point is executed.

The movement path determination unit 62 obtains the direction of movement of a detected person immediately after the person has entered the imaging region, and based on this direction of movement, estimates an entry point to the imaging region. Further, the movement path determination unit 62 obtains the direction of movement of the person immediately before the person leaves the imaging region, and based on this direction of movement, estimates an exit point from the imaging region. Then, the movement path determination unit 62 makes the movement path determination by determining whether the obtained entry point and exit point are on the determination lines.

FIG. 16A relates to an entry point when a person enters the frame or the imaging region, and this entry point is estimated based on the position where the person appeared in the imaging region anew, namely, a position P0 where the person was detected the first time in the imaging region, and a position P1 where the same person was detected next time. Specifically, a movement vector V from the position P0 of the first detection to the position P1 of the subsequent detection is computed, and a point of intersection between an extension line extended in the direction opposite to the direction of the movement vector V and the boundary of the imaging region, such that this point of intersection is set as an estimated entry point.

FIG. 16B relates to an exit point when a person leaves the frame or exits the imaging region, and this exit point is estimated based on the position where the person disappeared from the imaging region, namely, a position Pn where the person was last detected in the imaging region, and a position Pn-1 where the same person was detected immediately before the last detection. Specifically, a movement vector V from the position Pn-1 where the person was detected immediately before the last detection to the position Pn of the last detection is computed, and a point of intersection between an extension line extended in the direction same as the direction of the movement vector V and the boundary of the imaging region, such that this point of intersection is set as an estimated exit point.

This process of estimating the entry point and exit point is executed for each tracking ID, and the result of the estimation and the determination based on the estimation is reflected on the second flag (Flg b, x, y), third flag (Flg c, x, y), and movement amount information (dV, xxxx.xx) of the assessment result information of each set of tracking ID data of the log data, as shown in FIG. 9.

The second flag (Flg b, x, y) relates to the determination on the entry point, and the third flag (Flg, c, x, y) relates to the determination on the exit point. The x value of the second flag and the third flag indicates whether a prescribed criteria is met, and is set to 1 (one) when the criteria is met, and 0 (zero) when not. The y value specifies the determination line with respect to which the criteria is met, and is set to a value corresponding to the determination line with respect to which the criteria is met. In this embodiment, up to four determination lines can be defined, and the y value is set to one of 1, 2, 3 and 4 respectively corresponding to the four determination lines. If the criteria is not met, the y-value is set to 0 (zero). The movement amount information (dV, xxxx.xx) represents an amount of movement. When a person count ID is not assigned to a person (tracking ID), the calculation of amount of movement (or movement vector V) is not performed for the person, and the value of the movement amount information is set to 0 (zero).

As described above, in the present embodiment, by making a movement path determination, namely, determining whether the movement path of a person appearing in the imaging region is different from the movement path assumed of a customer to be included in the analysis, it is possible to determine whether the person of interest is a customer to be included in the analysis with high accuracy. Specifically, in the present embodiment, the movement path determination can be made simply by referring to a state of intersection of the movement path of the person with the determination lines, and thus, it is possible to readily carry out the movement path determination, while ensuring sufficient accuracy. Further, in the present embodiment, the movement path determination can be made by estimating an entry point to and an exit point from the imaging region and determining whether the entry point and exit point are located on the determination lines, and thus, it is possible to carry out the movement path determination out even more easily while ensuring sufficient accuracy.

In the present embodiment, the imaging region is set such that images of customers moving from the waiting area near the doorway of the restaurant toward the seating area are captured from the front of the customers and that customers moving toward the seating area moves downward from a central part of the imaging region. Therefore, by setting a determination line on a lower boundary of the imaging region, it is possible to identify customers moving toward the seating area. Further, since a staff member, who is not a customer, and a customer to be excluded from the analysis, such as a customer who moves in the restaurant after having been ushered to the table, tend to move to traverse the imaging region horizontally, by providing determination lines on left and right boundaries of the imaging region, it is possible to detect persons who are not customers as well as customers who should be excluded from the analysis.

Next, a description will be given of the group behavior assessment unit 57 shown in FIG. 7.

The group behavior assessment unit 57 divides persons appearing in the imaging region into groups, and determines whether each person is to be included in the analysis based on the state of occurrence and mode of behavior of the person in the group. The group behavior assessment unit 57 includes a grouping unit 63, a single-member group determination unit 64 and a group front determination unit 65, as shown in FIG. 7.

The grouping unit 63 executes a process of dividing persons appearing in the imaging region into groups. The single-member group determination unit 64 executes a process of determining whether each group is a single-member group, namely, a group consisting of a person who moves around alone, based on the number of members of each group obtained by the grouping unit 63. The group front determination unit 65 executes a process of determining, when a group consisting of a plurality of persons is detected, whether each person in the group is the person who leaves the frame first in the group, namely, the person who exits the imaging region first in the group.

Preferably, this group behavior assessment is performed such that persons determined to be excluded from the analysis by the stay determination and the movement path determination person are excluded from grouping in advance.

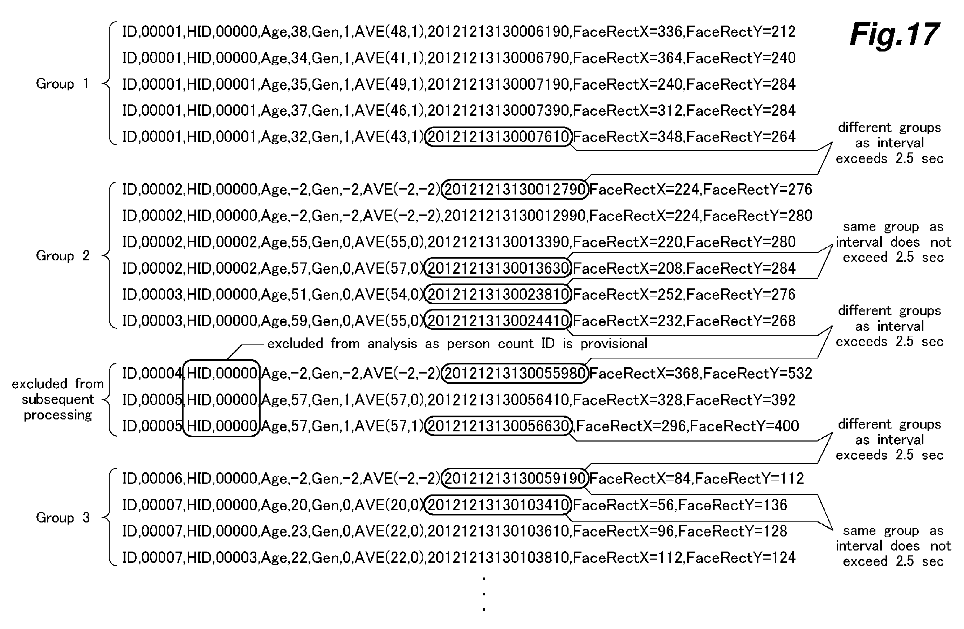

Next, a description will be given of the grouping process executed by the grouping unit 63 shown in FIG. 7. FIG. 17 is an explanatory diagram for explaining a mode of a grouping process executed by the grouping unit 63. In the illustrated example, Group 1 and Group 3 each consist of a single member, while Group 2 consists of two members. It is to be noted that "HID, 00000" shown in the field of person count ID is a provisional ID that is assigned to each tracking ID in an undetermined state before the tracking ID is detected three times consecutively.

The grouping unit 63 divides persons (tracking IDs) into groups based on the log data output from the individual behavior assessment unit 56. This grouping is performed based on intervals between the times of detection of persons detected sequentially in the imaging region. Namely, the log data includes sets of tracking ID data which are generated every time a person is detected in a time series of consecutive frames (captured images), and the timestamp included in each set of tracking ID data indicates the time of detection of the person. In the grouping process, the interval between the times of detection between each adjacent tracking IDs in the time series is computed, and each interval between detection times is compared with a predetermined threshold value, such that when the interval does not exceed the threshold value, it is determined that the corresponding two tracking IDs belong to the same group, and when the interval exceeds the threshold value, it is determined that the corresponding two tracking IDs belong to different groups.

In the example shown in FIG. 17, the grouping is performed with the threshold value being set at 2.5 sec. It is also to be noted that if none of the tracking IDs included in a group is assigned a person count ID, namely, none of the tracking IDs in the group is not detected three times consecutively and each tracking ID in the group remains to be assigned provisional ID (HID, 00000), the tracking IDs (or persons) in the group are determined to be excluded from the analysis and further processing is not performed on the group.

As described above, in the present embodiment, grouping of persons is performed based on the intervals between time of detection of the persons, it is possible to perform grouping of persons easily with sufficient accuracy.

Next, a description will be given of the process executed by the single-member group determination unit 64 and the group front determination unit 65 shown in FIG. 7.

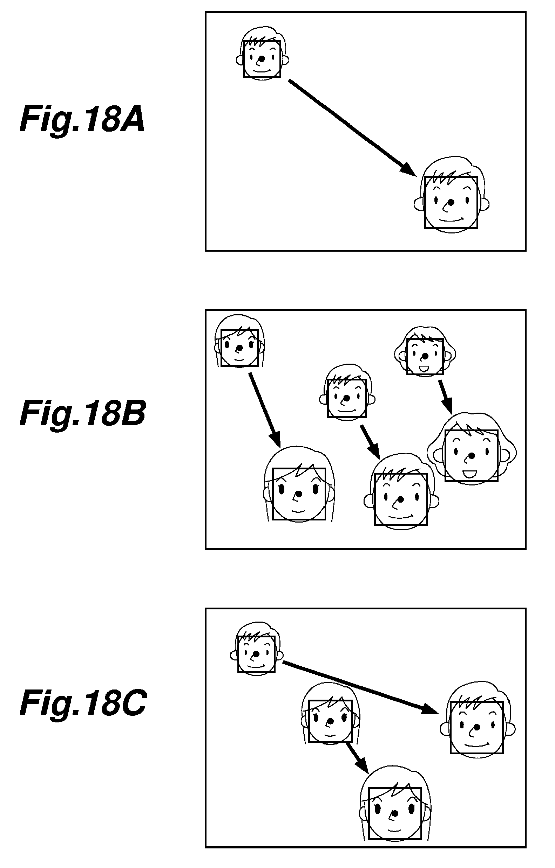

FIGS. 18A-18C are explanatory diagrams for explaining modes of movement of persons from near the doorway toward the seating area.

In the example shown in FIG. 18A, the group consists of a single person, and the single person moves alone. In the examples shown in FIGS. 18B and 18C, the group consists of multiple persons, and the multiple persons move together.

In the present embodiment, customers moving from near the doorway toward the seating area are to be included in the analysis. When a customer moves from near the doorway toward the seating area, usually the customer follows a staff member ushering the customer to the table, and thus, when persons are divided into groups, a customer to be included in the analysis, namely, a customer moving from near the doorway toward the seating area always belong to a group having two or more members.

Accordingly, in the present embodiment, when, as a result of grouping of persons, a group consisting of a single member (namely, a person moving alone) is detected as shown in FIG. 18A, the single-member group determination unit 64 determines that the person is a person to be excluded from the analysis. It is to be noted that as the tracking IDs that are not assigned a person count ID (or the tracking IDs that are assigned a provisional ID) are to be excluded from the analysis, even when a group contains multiple tracking IDs, if the group contains only one tracking ID assigned a person count ID, the group is determined to be a group consisting of a single member.

For example, in a case where a staff member moves around in the restaurant, the staff member usually moves alone. Also, in a case where a customer waiting for seating tries to have a look of the seating area of the restaurant, the customer tends to move alone in the vicinity of the doorway. In these cases, the movement path of the person can be undistinguishable from the movement path expected of a customer to be included in the analysis, but since the person moves alone, it is possible to determine that the person is not a customer moving from near the doorway toward the seating area, namely, not a customer to be included in the analysis.

Further, when a customer moves from near the doorway toward the seating area, it is usual that the customer follows a staff member ushering the customer to the table, and therefore, when persons are divided into groups, the person who moves at the front of each group and leaves the frame or exits the imaging region first in the group can be determined to be a staff member ushering a customer(s) to the seating area.

Accordingly, in the present embodiment, when, as a result of grouping of persons, a group consisting of multiple persons is detected as shown in FIGS. 18B and 18C, the group front determination unit 65 detects, from among the persons belonging to the group, the person who leaves the frame first, namely, the person who exits the imaging region first, and determines that the detected person is a person to be excluded from the analysis. In this group front determination process, the frame leaving time of each person in a group is estimated, and comparison is made between the estimated frame leaving times of the persons, to determine the person who left the frame first.

As described above, in the present embodiment, since it is highly likely that a person constituting a group alone, namely, a person who moves alone, is not a customer being ushered by a staff member to the seating area, a person who moves alone is determined to be a person to be excluded from the analysis, whereby it is possible to prevent a person who is not a customer or a customer who should be excluded from the analysis from being included in the analysis.

Further, in the present embodiment, since it is highly likely that the person who leaves the frame or exits the imaging region first in the group is a staff member who moves at the front of the group to usher the customer(s) in the group to the seating area, the person who leaves the frame first in this group is determined to be person to be excluded from the analysis, whereby it is possible to avoid including a staff member in the analysis.

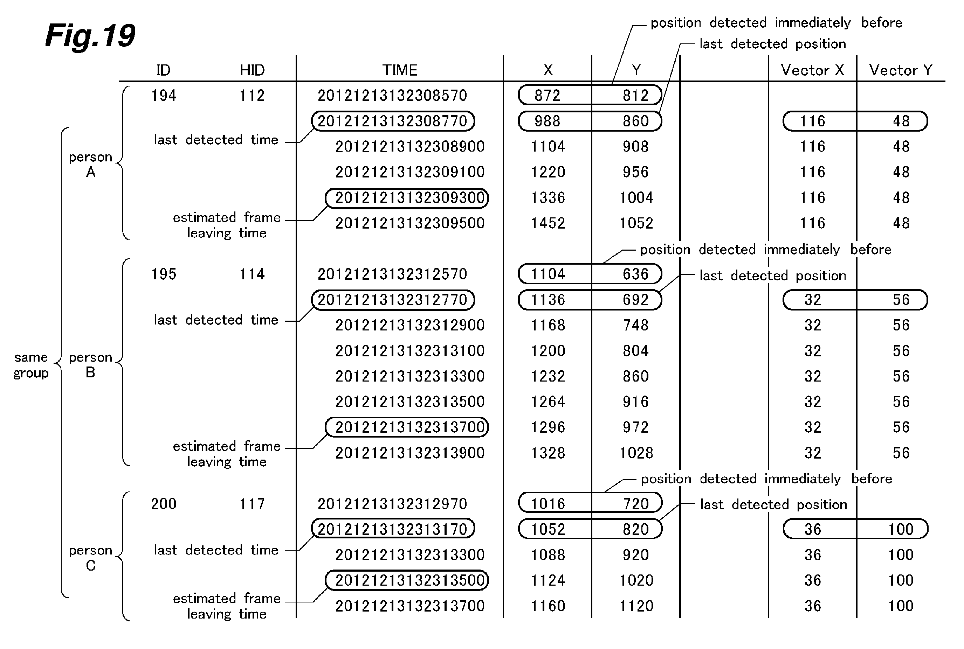

Next, description will be given of a process of estimating a frame leaving time executed by the group front determination unit 65 shown in FIG. 7. FIG. 19 is an explanatory diagram for explaining the process of estimating a frame leaving time executed by the group front determination unit 65.

In the frame leaving time estimation process, an amount of movement of each person immediately before exiting from the imaging region is obtained, and based on the amount of movement, the frame leaving time, namely, the time when the person exited the imaging region is estimated. Specifically, in the present embodiment, an amount of movement per unit time is obtained based on the position where the person of interest was last detected in the imaging region and the position where the person was detected in the imaging region immediately before the last detection, and the frame leaving time is estimated based on the amount of movement per unit time and the position and time of the last detection of the person.

In the example shown in FIG. 19, an amount of movement (Vector X, Vector Y) in the X direction and Y direction from the position where the person was detected immediately before the last detection to the position where the person was last detected is computed, the amount of movement is repeatedly added to the position of the last detection to obtain the number of times N of additions of the amount of movement till the position resulting from the addition goes out of the frame, namely, till one of the X-coordinate value and the Y-coordinate value goes out of the imaging region, and a time period obtained by multiplying the number of times N by the frame interval (for example, 200 msec when the frame rate is 5 fps) is added to the time of the last detection to obtain the frame leaving time.

As described above, in the present embodiment, the frame leaving time of each person is estimated based on the amount of movement immediately before the person leaves the imaging region, and thus, the frame leaving time, i.e., the time when the person exits the imaging region can be estimated easily with sufficient accuracy.

It is to be noted that in the example shown in FIG. 19, the imaging region has an image size of 4 VGA (1280 x 960), such that the X-coordinate value of the imaging region is in the range from 0 to 1280, while the Y-coordinate value of the same is in the range from 0 to 960, and when the X-coordinate value and/or the Y-coordinate value obtained by repeatedly adding the amount of movement to the position of the last detection goes out of the respective ranges of the X-coordinate value and the Y-coordinate value of the imaging region, it is determined that the person leaves the frame.

It is to be noted that this frame leaving time estimation process may be performed together with the entry point and exit point estimation process described above with reference to FIG. 16.

After the frame leaving time of each person in each group has been estimated as described in the foregoing, comparison is made between the frame leaving times of the persons in each group to determine the person who left the frame first. In the example shown in FIG. 19, person A, person C and person B left the frame in this order, and person A who left the frame first is determined to be a person to be excluded from the analysis.

It is to be noted that in a case where the frame leaving time is the same for multiple persons, the person whose amount of movement is the smallest is determined to be the person who left the frame (imaging region) first. Namely, when a customer is ushered by a staff member to the seating area, usually the customer does not move beyond the staff member and follows the staff member substantially at the same moving speed, namely, the average moving speed is considered to be basically the same for every person in the same group. Therefore, if two persons move at the same speed, it can be considered that the person whose amount of movement immediately before leaving the frame is smaller leaves the frame earlier.

Although the present invention has been described in terms of concrete embodiments thereof, these embodiments were provided for illustrative purposes and the present invention is not limited by the embodiments. It is also to be noted that not all of the structural elements of the customer category analysis device, customer category analysis system and customer category analysis method as shown in the embodiments of the present invention are necessarily indispensable, and they may be selectively used as appropriate without departing from the spirit of the present invention.

For instance, in the present embodiment, description was made of an exemplary case in which the invention was applied to a restaurant such as a casual dining restaurant. However, the present invention may be applied to a commercial establishment other than a restaurant, such as a retail store, which can be a convenience store, etc.

Further, though in the present embodiment, description was made of an example in which the entirety of the customer category analysis process was executed by the PC 3 set up at the restaurant as shown in FIG. 3, the entirety of the customer category analysis process may be executed by another information processing device, such as the PC 7 set up at the management office or a cloud computer 21 forming a cloud computing system, as shown in FIG. 1, for example. Further, the customer category analysis process may be executed by cooperation of multiple information processing devices, in which case, the multiple information processing devices are configured to be able to communicate or share information with each other via a communication medium such as an IP network or LAN or via a storage medium such as a hard disk or a memory card. Thereby, the multiple information processing devices jointly executing the customer category analysis process constitute a customer category analysis system.

In this case, it is preferred that the PC 3 set up at the restaurant be configured to execute at least the customer category identification process. In such a structure, since the customer category information obtained by the customer category identification process has a small amount of data, even if the remaining processes are performed by an information processing device set up at a place other than the restaurant, such as the PC 7 set up at the management office, the communication load can be small, and thus, it is easy to operate the system in the form of a wide area network.

It may be also preferred that the cloud computer 21 be configured to perform at least the customer category identification process. In such a structure, although the customer category identification process requires a large amount of computation, this is achieved by the information processing device constituting a cloud computing system, and therefore, it is not necessary to prepare a high-speed information processing device on the user side; namely at the restaurant or the like. Further, since the remaining processes require a small amount of computation, the remaining processes can be executed as extended functions of an information processing device set up at the restaurant to serve as the sales information management device, and this can reduce the cost born by the user.

The cloud computer 21 may be configured to execute the entirety of the customer category analysis process. In such a structure, it becomes possible to view the analysis result on a mobile terminal such as a smartphone 22 in addition to the PC 3 set up at the restaurant and the PC 7 set up at the management office, and this allows a user to view the result of analysis of the customer categories not only at the restaurant or the management office but also at any other place, such as a place the user is visiting on business.

Further, though in the present embodiment, the PC 3 set up at the restaurant and the PC 7 set up at the management office are used to view the customer category analysis result, it is possible to provide a browser device for viewing the customer category analysis result separately from the PCs 3 and 7. For example, it is possible to use a smartphone 22 as a browser device for viewing the customer category analysis result as described in the foregoing, or to provide the POS workstation 4 with a function of a browser device for viewing the customer category analysis result. Further, though in the present embodiment, the customer category analysis result is displayed on the display units 13 and 17 to enable a user to view the customer category analysis result, it is possible to output the customer category analysis result through a printer.

Further, though in the present embodiment, the customer categories are defined on both gender and age, it is possible to define the customer categories based on either gender or age, or on any other attribute(s) such as race. Further, in the present embodiment, each customer category has a 10-year age range (except for the uppermost and lowermost customer categories), but the customer categories may be defined to have age ranges different from those illustrated in the embodiment.

Yet further, though in the present embodiment, the time slots each having a duration of one hour define time periods for totaling, the time periods for totaling are not limited to the illustrated embodiment, and may have any duration such as one hour to several hours, one day to several days, one week to several weeks, one month to several months, etc., depending on the user needs.

The customer category analysis device, customer category analysis system and customer category analysis method according to the present invention have an advantage of being capable of avoiding including staff members in the analysis and including the same customer more than once in the analysis, such that the analysis of the customer categories of the customers visiting the commercial establishment is performed with high accuracy, and thus, are useful as a customer category analysis device, customer category analysis system and customer category analysis method for analyzing customer categories of customers visiting a commercial establishment.

The contents of the original Japanese patent application(s) on which the Paris Convention priority claim is made for the present application as well as the contents of the prior art references mentioned in this application are incorporated in this application by reference.

## Claims

1. A customer category analysis device (32) for analyzing customer categories of customers visiting a commercial establishment, comprising:
a customer category identification unit (33) configured to identify a customer category of each person appearing in an imaging region defined such that an image of each customer moving from a waiting area near a doorway of the commercial establishment toward a seating area is captured from a front of the customer, and obtain customer category information indicating a result of customer category identification;
a filtering unit (35) configured to, based on a mode of behavior of each person appearing in the imaging region, determine whether the person is a customer to be included in the analysis according to a predetermined determination criteria for limiting persons to be included in the analysis to customers who exhibit a mode of behavior of moving toward the seating area, and exclude the person from the analysis if the person is determined not to be included in the analysis;
a totaling unit (36) configured to total the customer category information obtained by the customer category identification unit for persons selected by the filtering unit; and
an output information generation unit (37) configured to generate output information representing a result of analysis based on a result of totaling by the totaling unit.

2. The customer category analysis device according to claim 1, wherein the filtering unit (61) determines whether each person appearing in the imaging region is a customer to be included in the analysis by making a stay determination, which is a determination of whether each person appearing in the imaging region is in a staying state.

3. The customer category analysis device according to claim 1 or 2, wherein the filtering unit (62) determines whether each person appearing in the imaging region is a customer to be included in the analysis by making a movement path determination, which is a determination of whether a movement path of the person appearing in the imaging region is different from a movement path assumed of a customer to be included in the analysis.

4. The customer category analysis device according to any one of claims 1 to 3, wherein the filtering unit (63, 64) divides the persons appearing in the imaging region into groups and determines whether each person appearing in the imaging region is a customer to be included in the analysis based on a determination of whether each group consists of a single person.

5. The customer category analysis device according to any one of claims 1 to 4, wherein the filtering unit (63, 65) divides the persons appearing in the imaging region into groups and determines whether each person appearing in the imaging region is a customer to be included in the analysis by making a group front determination, in which it is determined, when a group consisting of a plurality of persons is detected, whether each person in the group is a person who exits the imaging region first in the group.

6. The customer category analysis device according to claim 2, wherein the filtering unit (61) makes the stay determination based on a determination of whether the person exits a determination area defined in the imaging region.

7. The customer category analysis device according to claim 3, wherein the filtering unit (62) makes the movement path determination based on a state of intersection of the movement path of each person appearing in the imaging region with a determination line defined on a boundary of the imaging region.

8. The customer category analysis device according to claim 7, wherein the filtering unit (62) obtains a direction of movement of each person immediately after the person has entered the imaging region, and based on the direction of movement, estimates an entry point to the imaging region, wherein the filtering unit obtains a direction of movement of each person immediately before the person leaves the imaging region, and based on the direction of movement, estimates an exit point from the imaging region, and wherein the filtering unit makes the movement path determination by determining whether the obtained entry point and exit point are on the determination line.

9. The customer category analysis device according to claim 4 or 5, wherein the filtering unit (63) divides the persons appearing in the imaging region into groups based on intervals between times of detection of the persons detected sequentially in the imaging region.

10. The customer category analysis device according to claim 5, wherein the filtering (62) unit obtains an amount of movement of each person immediately before exiting the imaging region, and based on the amount of movement, estimates a time when the person exited the imaging region.

11. The customer category analysis device according to any one of claims 1 to 10, wherein the output information generation unit (37) generates, as the output information, customer category trend information relating to a trend of change in the number of customers in each category based on a time series of number of customers in each category obtained for every predetermined time period.

12. The customer category analysis device according to claim 11, wherein the customer category trend information represents a ratio of the number of customers in each category to a total number of customers obtained every said predetermined time period within daily opening hours of the commercial establishment.

13. The customer category analysis device according to any one of claims 1 to 12, the customer category information includes at least one of gender and age.

14. A customer category analysis system for analyzing customer categories of customers visiting a commercial establishment, comprising:
an imaging device (1) capturing images of customers; and
a plurality of information processing devices (7, 8),
wherein the plurality of information processing devices jointly comprise:
a customer category identification unit (33) configured to identify a customer category of each person appearing in an imaging region defined such that an image of each customer moving from a waiting area near a doorway of the commercial establishment toward a seating area is captured from a front of the customer ,and obtain customer category information indicating a result of customer category identification;
a filtering unit (35) configured to, based on a mode of behavior of each person appearing in the imaging region, determine whether the person is a customer to be included in the analysis according to a predetermined determination criteria for limiting persons to be included in the analysis to customers who exhibit a mode of behavior of moving toward the seating area, and exclude the person from the analysis if the person is determined not to be included in the analysis;
a totaling unit (36) configured to total the customer category information obtained by the customer category identification unit for persons selected by the filtering unit; and
an output information generation unit (37) configured to generate output information representing a result of analysis based on a result of totaling by the totaling unit.

15. A customer category analysis method for analyzing customer categories of customers visiting a commercial establishment by use of an information processing device set up inside or outside the commercial establishment, comprising:
identifying a customer category of each person appearing in an imaging region defined such that an image of each customer moving from a waiting area near a doorway of the commercial establishment toward a seating area is captured from a front of the customer, and obtaining customer category information indicating a result of customer category identification;
determining, based on a mode of behavior of each person appearing in the imaging region, whether the person is to be included in the analysis according to a predetermined determination criteria for limiting persons to be included in the analysis to customers who exhibit a mode of behavior of moving toward the seating area, and excluding the person from the analysis if the person is determined not to be included in the analysis;
totaling the customer category information obtained by the customer category identification unit for persons determined to be included in the analysis; and
generating output information representing a result of analysis based on a result of totaling.
